# EUROPÄISCHE PATENTSCHRIFT

(11) **EP 0 923 421 B1**
(45) Veröffentlichungstag und Bekanntmachung des Hinweises auf die Patenterteilung: **29.11.2000**
(21) Anmeldenummer: 97940116.3
(22) Anmeldetag: 22.08.1997
(51) Int. Cl.: B23B 31/30, B23B 51/10

(54) **DEHNSPANNFUTTER**
EXPANSION CLAMPING CHUCK
MANDRIN DE SERRAGE EXPANSIBLE

(30) Priorität: 23.08.1996 DE 29614727 U
(43) Veröffentlichungstag der Anmeldung: 23.06.1999
(73) Patentinhaber: Schunk GmbH & Co. KG Fabrik für Spann- und Greifwerkzeuge, 74348 Lauffen (DE)
(72) Erfinder: RETZBACH, Thomas, D-74357 Bönnigheim (DE); MÜLLER, Joachim, D-74182 Obersulm (DE)
(74) Vertreter: Beetz & Partner Patentanwälte
(86) Internationale Anmeldenummer: EP9704588
(87) Internationale Veröffentlichungsnummer: WO9807538

(56) Entgegenhaltungen:
- WO-A-90/04474
- DE-U- 9 411 260
- GB-A- 2 112 677

## Beschreibung

Die Erfindung betrifft ein Dehnspannfutter zum Einspannen eines Werkzeugschaftes, bei dem ein massiver Futterkörper in seinem Spannteil eine zentrale Aufnahmebohrung zur Aufnahme des einzuspannenden Werkzeugschafts aufweist, und im Inneren des Spannteils des Futterkörpers eine koaxial zur Aufnahmebohrung angeordnete langgestreckte Ringkammer ausgebildet ist, wobei durch hydraulischen Innendruck in der Ringkammer seine Umfangswand nach radial innen zum Spannen des Werkzeugschaftes elastisch verformbar ist, wie in der DE-U-9411260 offenbart, die als nächstliegender Stand der Technik anzusehen ist.

Dehnspannfutter sind in verschiedenen Ausführungen bekannt und werden in der Regel zum genau zentrierten Einspannen eines Werkzeugschaftes, z.B. eines Bohrer- oder Fräserschaftes, verwendet, um diese Werkzeuge in der Arbeitsspindel einer entsprechenden Werkzeugmaschine zu fixieren. Bei den, z.B. aus dem DE-GM 94 11 260 oder auch aus der DE-OS 27 00 934 bekannten, hydraulischen Dehnspannfuttern wird die im Futterkörper ausgebildete Ringkammer nach radial innen von einer sog. Dehnhülse begrenzt, die sich bei Anlegen des hydraulischen Druckes in dieser Ringkammer nach radial innen elastisch verformt und dabei den in die Aufnahmebohrung eingeschobenen Werkzeugschaft allseitig fest umgreift.

Aus dem Prospekt TENDO der Firma Schunk ist ein hydraulisches Dehnspannfutter für Werkzeugschärf- und Schleifmaschinen bekannt, bei welchem in dem zylindrischen Spannteil des Futterkörpers die mit der inkompressiblen Flüssigkeit gefüllte Ringkammer ausgeformt ist, wobei die radiale Innenwand dieser Ringkammer eine relativ geringe Wandstärke besitzt und zum Spannen des Werkzeugschaftes unter dem hydraulischen Druck in der Ringkammer nach radial innen verformt wird. Hinter der zentralen Aufnahmebohrung für den Werkzeugschaft ist in einer Querbohrung ein Gewindebolzen angeordnet, der an seinem von außen zugänglichen Ende eine Mehrkantöffnung zum Einführen eines Werkzeuges sowie in diesem verbreiterten Endkopf ein Außengewinde aufweist, das mit einem in einem Teil dieser Querbohrung eingearbeiteten Innengewinde in Eingriff steht. Am anderen Ende des Bolzenschaftes ist ein Kolben ausgebildet, der durch eine Schraubbewegung des Bolzens in einem Zylinderraum abgedichtet hin und her bewegt wird. Dieser Zylinderraum steht über einen achsparallel im Futterkörperteil ausgebildeten Kanal mit der Ringkammer in Verbindung. Durch Verdrehen des Bolzens mittels eines von außen eingeführten Werkzeuges wird über die entsprechende Kolbenverschiebung in den mit inkompressibler Flüssigkeit gefüllten Zylinder der für den Spannvorgang bzw. die elastische Verformung der Innenwand erforderliche Innendruck in der Ringkammer erzeugt. Dieses und auch die weiter bekannten Dehnspannfutter sind jedoch nur zum Spannen eines einzigen Bauteils, d.h. eines Werkzeugschaftes, konzipiert.

Andererseits sind auch sog. Dehnspanndorne zur zentrischen Fixierung von beispielsweise hohlzylindrischen Werkstücken für die Drehbearbeitung bekannt, bei denen eine den jeweiligen Spannbereich bestimmende schmale Ringkammer in einer entsprechenden Ausnehmung des Dornkörpers ausgebildet ist, die nach radial außen von einer Dehnspannhülse begrenzt wird. Durch Aufbau eines hydraulischen Innendruckes in dieser mit inkompressibler Flüssigkeit gefüllten Ringkammer erfolgt eine Dehnung dieser äußeren Dehnhülse nach radial außen und damit eine Spannung des auf den Dorn zuvor aufgesteckten Werkstücks.

In der DE-PS 743 530 ist eine Spannvorrichtung für Werkzeugmaschinen beschrieben, die eine doppelwandige Spannhülse zum Fixieren eines hohlzylindrischen Werkzeugs auf einer Welle aufweist. Die Spannhülse ist doppelwandig ausgeführt und an einem Ende mit einem ringförmigen Drehkörper fest verbunden, in welchem eine Einrichtung zum Erzeugen eines hydraulischen Drucks in der langgestreckten Ringkammer der Spannhülse untergebracht ist. Durch diesen hydraulischen Druck in der Ringkammer werden die beiden Umfangswände der doppelwandigen Spannhülse nach radial innen und radial außen elastisch verformt und in Druckanlage an die Außenfläche der Welle sowie an die Innenfläche des hohlzylindrischen Werkzeugs gebracht. Das gleichzeitige Spannen von zwei Werkzeugen ist weder vorgesehen noch ohne weiteres möglich.

Aus der WO 93/18880 ist eine hydraulische Spannbuchse zum Einspannen von Drehwerkzeugen in die Werkzeugaufnahmen eines Revolverkopfes bekannt, die einen dünnwandigen hohlzylindrischen Spannteil und einen daran anschließenden Ringkörper aufweist. Eine langgestreckte Ringkammer kommuniziert mit einer im Ringkörper angeordneten Einrichtung zur Erzeugung eines hydraulischen Innendrucks. Die beiden Umfangswände der Ringkammer haben eine geringe Wandstärke und werden durch den hydraulischen Druck in der Ringkammer elastisch verformt und gegen die Außenwand des Drehmeißelschaftes sowie gegen die Innenwand der Werkzeugaufnahme in Druckanlage gebracht.

Schließlich ist es z.B. aus der DE-A 1 552 257 und dem DE-U 9 411 260 bekannt, den Schaft eines Werkzeugs mittels einer im Spannfutter gesondert positionierten Dehnhülse zu spannen und z.B. durch eine Verzahnung bzw. einen Klaueneingriff zusätzlich gegen Verdrehung zu sichern.

Aufgabe der Erfindung ist es, ein in der Arbeitsspindel einer Werkzeugmaschine fixierbares Dehnspannfutter zu schaffen, das neben der Einspannung eines Werkzeugschaftes auch die zentrierte Einspannung eines hohlzylindrischen Bauteils insbesondere einer Fasbuchse auf einfache und genaue Weise ermöglicht.

Diese Aufgabe wird durch die im Patentanspruch 1 angegebenen Merkmale gelöst.

Die Erfindung bietet erstmals auf technisch einfache und kostengünstige Weise die Möglichkeit, neben einem vollzylindrischen Bauteil, beispielsweise dem Schaft eines Werkzeuges, zusätzlich noch ein hohlzylindrisches Bauteil, beispielsweise ein weiteres Werkzeug, einen Meßfühlerhalter od. dgl., mit hoher Festigkeit und genauer Zentrierung auf die Längsachse in jeweils vorgegebener axialer Position zu spannen. Da der im Inneren der Ringkammer erzeugte hydraulische Druck nach radial innen ebenso wie nach radial außen wirkt, tritt eine gleichzeitige elastische Verformung der radial inneren und auch der radial äußeren Begrenzungswand der Ringkammer ein, so daß mit einem einzigen Erzeugungsvorgang des Innendrucks gleichzeitig und ohne weitere Maßnahmen zwei gesonderte Bauteile gespannt werden. Bei Verwendung von zwei gesonderten Werkzeugen, z.B. einem Schaftbohrer und einem ring- oder buchsenförmigen Faswerkzeug, können in einem einzigen Bearbeitungsvorgang eine Bohrung in ein Werkstück eingebracht und eine Fase am Bohrungseingang eingearbeitet werden. Bei Verwendung eines hülsenförmigen Werkzeuges mit geeigneter stirnseitiger Schneidengeometrie lassen sich auch sog. Differentialbohrungen in einem Arbeitsgang herstellen. Um dabei auch größere Drehmomente auf das zusätzliche Werkzeug störungsfrei übertragen zu können, zeichnet sich ein weiterer Aspekt der Erfindung dadurch aus, daß der hohlzylindrische bzw. hülsenförmige Teil des zusätzlichen Werkzeuges gegen Drehung formschlüssig gesichert auf dem Futterkörper fixiert ist. Eine technisch einfache und kostengünstige Drehsicherung besteht beispielsweise aus einer am rückwärtigen Rand des hülsenförmigen Teils angeformten Nase oder Lasche, die in eine entsprechend geformte Axialnut im Futterkörper längsverschiebbar eingepaßt ist und Axialverstellung des hülsenförmigen Teils bzw. der Fasbuchse zuläßt. Um die Länge des zusätzlichen außen gespannten Werkzeugs genau einzustellen und ggf. eine gegenseitige Anpassung der beiden Werkzeugpositionen herbeizuführen, ist nach einem weiteren Aspekt der Erfindung die axiale Betriebsstellung des zusätzlichen Werkzeugs auf dem Futterkörper feinfühlig justierbar. Als Justiermittel haben sich Abstandsbuchsen als besonders zweckmäßig erwiesen, die auf den rückwärtigen Endabschnitt des hülsenförmigen Teils des zusätzlichen Werkzeugs vor dessen Einspannung aufgeschraubt werden und sich mit ihrer Endkante an einem Ringanschlag des Futterkörpers abstützen.

Um die nach radial innen und die nach radial außen gerichteten Spannkräfte gezielt zu beeinflussen, variieren nach einem weiteren Aspekt der Erfindung die Dicken der Innenwandung und der Außenwandung der Ringkammer über deren Länge, was praktisch durch eine geringfügig konische Anordnung der Ringkammer im Futterkörper oder auch durch einen in Längsrichtung bogenförmigen oder abgestuften Verlauf der Ringkammer verwirklicht wird.

Nach einem weiteren Aspekt der Erfindung kann die Außenwand des Spannteils des Futterkörpers längsgerichtete und über den Umfang gleichmäßig verteilte Bereiche von verringerter Wandstärke in wechselnder Folge mit dickeren Wandbereichen aufweisen. Die dünneren Wandbereiche können Längsnuten sein und bewirken, daß die dickeren Wandbereiche mit erhöhter Spannkraft gegen die zylindrische Innenfläche der Hülse drücken. Es ist auch möglich, die Außenwandung des Spannteils des Futterkörpers und die Innenwandung der Hülse des zusätzlichen Werkzeugs als Mehrkant-Profil z.B. im Sechskant-Querschnitt auszuführen, wodurch sich eine zusätzliche stabile Verdrehsicherung der beiden Bauteile während und nach dem Spannvorgang ergibt.

Wenn eine zusätzliche formschlüssige Verbindung einer Hülse auf einem Spannfutter oder Spanndorn mittels eines Schraubgewindes erwünscht ist, kann eine Verdrehsicherung dadurch erreicht werden, daß der Bereich der in Eingriff befindlichen Gewinde hydraulisch aufgeweitet wird, wodurch die Gewindegänge der beiden Bauteile mit hoher Kraft ineinander gepreßt werden und dabei das für den Schraubvorgang notwendige Spiel beseitigt wird.

Weitere Vorzüge und Besonderheiten des erfindungsgemäßen Dehnspannfutters lassen sich der folgenden Beschreibung von Ausführungsbeispielen sowie der Zeichnung entnehmen. Es zeigen:
- Fig. 1: ein Dehnspannfutter mit eingespanntem Schaft und aufgespanntem hohlzylindrischen Faswerkzeug in teilgeschnittener Seitenansicht;
- Fig. 2: ein anderes Dehnspannfutter mit einer Verdrehsicherung des Faswerkzeugs;
- Fig. 2a: eine Draufsicht X auf die Verdrehsicherung;
- Fig. 3: das Dehnspannfutter nach Fig. 1 bzw. 2 im Querschnitt II-II;
- Fig. 4: eine andere Ausführung des Dehnspannfutters im schematischen Querschnitt;
- Fig. 5, 6: weitere Ausführungen von Dehnspannfuttern im schematischen Axialschnitt.

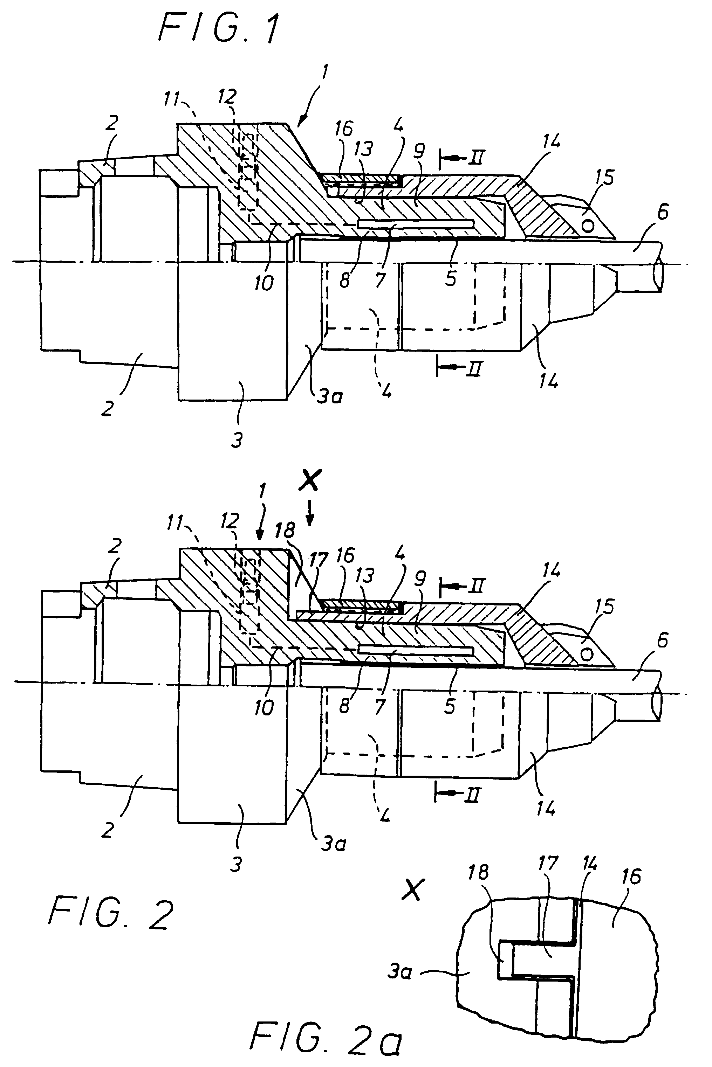

Wie aus Fig. 1 ersichtlich, besteht das Dehnspannfutter aus einem Futterkörper 1, der mit seinem rechten kegelstumpfförmigen Endteil 2 in bekannter Weise in die nicht dargestellte Aufnahmevorrichtung einer drehangetriebenen Arbeitsspindel einer Werkzeugmaschine eingespannt wird. An einen mittleren Teil 3 von verbreitertem Durchmesser des vorzugsweise massiv und einstückig ausgebildeten Futterkörpers 1 schließt über einen konischen Abschnitt ein hohlzylindrischer Spannteil 4 an, der im oberen Teil der Fig. 1 schraffiert und im unteren Teil gestrichelt dargestellt ist. Im Futterkörper 1 ist ferner eine zentrale Aufnahmebohrung 5 ausgebildet, in die der hier zylindrische Schaft 6 z.B. eines Bohrwerkzeugs eingeschoben wird.

Eine schmale Ringkammer 7 ist im Inneren des Spannteils 4 des Futterkörpers 1 achszentriert und koaxial zur Aufnahmebohrung 5 ausgebildet, deren Länge etwa dem erforderlichen Spannbereich entspricht. Diese endseitig geschlossene Ringkammer 7 wird nach radial innen von einer Innenwand 8 und nach radial außen von einer Außenwand 9 begrenzt, die beide Bestandteile des Futterkörpers 1 sind. Die Wandstärke der Außenwand 9 ist etwa 1,5 bis 3mal größer als die Wandstärke der Innenwand 8. Die Ringkammer 7 steht über einen - gestrichelt dargestellten - Kanal 10 im Futterkörper 1 mit einem Zylinderraum 11 in Verbindung, der endseitig von einem Stellglied 12 begrenzt wird, das in bekannter Weise aus einem Kolben, einem Schaft und einem äußeren Gewindeabschnitt besteht, in welchen ein Drehwerkzeug eingeführt werden kann. Der Zylinder 11, der Kanal 10 und auch die Ringkammer 7 sind vollständig mit einer inkompressiblen Flüssigkeit gefüllt.

Die Umfangsfläche 13 der Außenwand 9 des Spannteils 4 ist ebenso wie die innere Umfangsfläche der Innenwand 8 als zylindrische und feinbearbeitete Spannfläche ausgebildet. Auf diese Umfangsfläche 13 der Außenwand 9 ist ein buchsenförmiges Zusatzwerkzeug 14 aufgeschoben, das an seinem keilförmig zulaufenden rechten Endabschnitt eine Schneidplatte 15 aufweist und im vorliegenden Fall ein Faswerkzeug zum Anfasen des mit dem Bohrer hergestellten Bohrlochendes ist. Mittels eines Einstellringes 16 kann die Axialposition dieses Faswerkzeuges 14 in bezug auf die Bohrerspitze bzw. auf den Spannteil 4 des Futterkörpers 1 eingestellt werden. Dieser Einstellring 16 ist über ein Innengewinde auf den eingearbeiteten Endabschnitt des buchsenförmigen Zusatzwerkzeugs 14 aufgeschraubt und stützt sich in der dargestellten an dem konischen Abschnitt des Futterkörpers 1 ab. Durch Verdrehen dieses Einstellringes 14 wird die genaue Axialposition des Zusatzwerkzeugs 14, 15 in bezug auf die Lage bzw. Länge des Hauptwerkzeugs vor dem Spannvorgang eingestellt.

Zum gleichzeitigen Spannen des Werkzeugschaftes 6 in der Aufnahmebohrung 5 und des Zusatzwerkzeugs 14 auf der äußeren Spannfläche 13 des Spannteils 4 wird durch Einschrauben des Stellgliedes 12 in die Gewindebohrung über dessen Kolben ein hoher Druck auf die im Zylinder 11 eingeschlossene Flüssigkeit ausgeübt, der über den Kanal 10 in die Ringkammer 7 übertragen wird. Dieser hydraulische Druck bewirkt eine elastische Auswölbung der Innenwand 8 bis zu ihrer druckfesten Anlage an der Außenwandung des Schaftes 6 sowie gleichzeitig eine radiale Auswölbung der Außenwand 9 bis zur druckfesten Anlage an der Innenwand des hülsenförmigen Faswerkzeugs 14. Durch einen einzigen Betätigungsvorgang des Stellgliedes 12 werden somit zwei gesonderte Bauteile, nämlich einmal der Werkzeugschaft 6 und zum anderen das hülsen- bzw. buchsenförmige Teil des Zusatzwerkzeugs 14 gleichzeitig gespannt, wobei die für das Dehnspannprinzip charakteristische genaue Zentrierung beider Werkzeuge 6 und 14 erreicht wird.

Die Ausführung nach Fig. 2 entspricht weitgehend der vorstehend beschriebenen Ausführung nach Fig. 1, wobei gleiche Bauteile mit gleichen Bezugszeichen gekennzeichnet sind. Wenn auf das Zusatzwerkzeug 14 vom Spannfutter größere Drehmomente übertragen werden sollen und die Außenwand 9 eine größere Wandstärke hat ist eine zusätzliche formschlüssige Verdrehsicherung angebracht, um jeglichen Schlupf zwischen dem beim Spanen belasteten Zusatzwerkzeug 14 und dem Futterkörper 1 zu unterbinden. Diese zusätzliche Verdrehsicherung kann auf verschiedene Weise durch entsprechende Formgebung der Bauteile wie z.B. Keil-Nut-Verbindungen, unrunde Querschnitte etc. erfolgen. Bei der in Fig. 2 dargestellten Lösung ist an dem hülsenförmigen Teil des Zusatzwerkzeugs 14 eine axiale Lasche 17 angeformt, die im Scheibesitz in einen Ausschnitt 18 im konischen Übergangsabschnitt 3a des Futterkörpers 1 eingreift. Die Breite der formstabilen Lasche 17 entspricht etwa der Breite des Ausschnitts 18 und ihre Länge ist geringer als die des Ausschnitts 18, um Kollisionen bei der Axialverstellung des Zusatzwerkzeugs 14 zu verhindern.

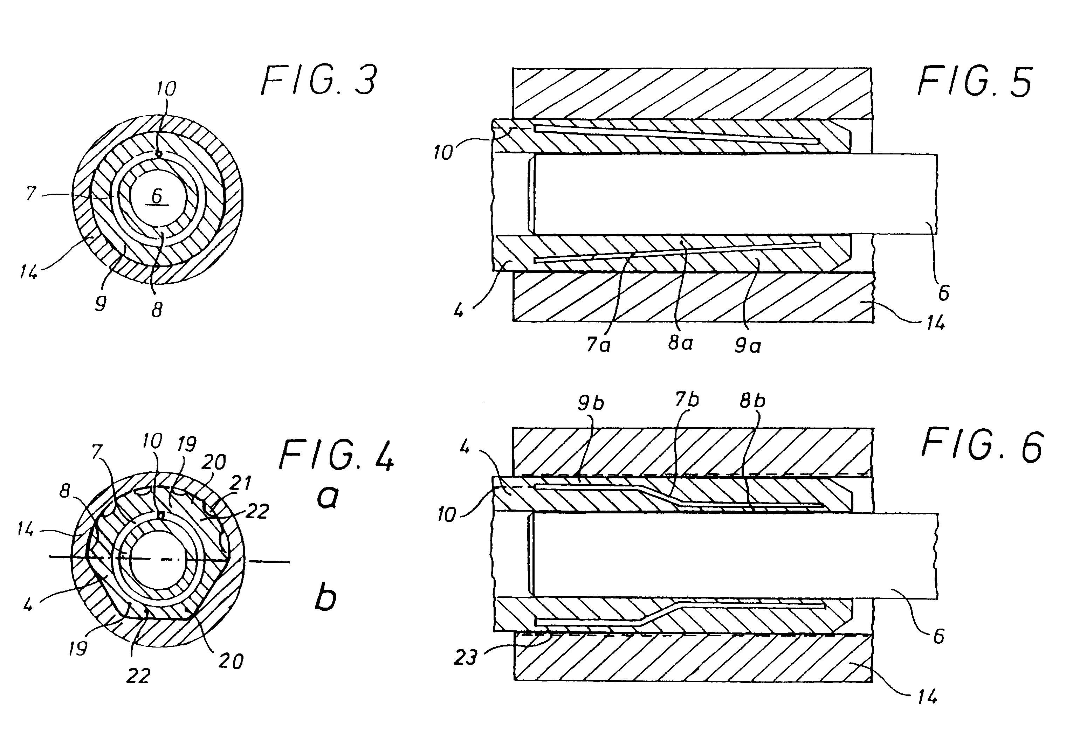

Während bei den Ausführungen nach Fig. 1 und 2 die Spannfläche 13 an der Außenwand 9 zylindrisch durchgehend ausgebildet ist, hat bei den Varianten nach Fig. 4 die Außenwand 19 einen davon abweichenden Querschnitt mit dickeren und dünnwandigeren Bereichen 20, 22, die sich zweckmäßig in gleicher Winkelversetzung über den Umfang verteilt und in der gesamten Länge des wirksamen Spannbereiches erstrecken. Die Bereiche 22 von verminderter Wandstärke werden bei der in Fig. 4a gezeigten Variante durch äußere Längsnuten 21 in der Außenwand 19 gebildet.

Wie in Fig. 4b gezeigt können der Spannteil 4 einen äußeren und die Buchse 14 einen inneren Sechskant-Querschnitt haben, wodurch zusätzlich zu einer in bestimmten Wandbereichen erhöhten Spannwirkung noch eine formschlüssige Verdrehsicherung erreicht wird.

Bei den in den Fig. 5 und 6 dargestellten Ausführungen ändern sich die vom Spannteil 4 auf den inneren Schaft 6 und auf die äußere Buchse 14 ausgeübten Spannkräfte über die Länge der Spannzone, was bei bestimmten Anwendungsfällen Vorteile bietet. Die Variante nach Fig. 5 weist eine im Inneren des Spannteils 4 konisch verlaufende Ringkammer 7a auf, die eine gleichmäßige Änderung der Wandstärken der inneren und der äußeren Begrenzungswand 8a und 9a bewirkt.

Durch die größere Dehnung der dünneren Trennwand 8a in dem rechten Teil der fig. 5 können in diesem Abschnitt größere Toleranzen zum Schaft 6 überbrückt bzw. toleriert werden. Entsprechendes gilt im rechten Teil der Fig. 5 für die hier dünnere Außenwand 9a in bezug auf die Buchse 14.

Bei der Ausführung nach Fig. 6 besteht die Ringkammer 7b aus drei Abschnitten, nämlich aus einem linksseitigen radial äußeren Abschnitt, einem mittleren konischen Abschnitt und einem rechtsseitigen radial inneren Abschnitt. Da der hydraulische Druck in der Ringkammer 7b über deren Länge gleich groß ist, ergeben sich in den beiden Endabschnitten aufgrund der unterschiedlichen Wandstärken der Innen- und Außenwand 8b und 9b entsprechend unterschiedliche Spanneffekte. Zusätzlich wird bei dieser Ausführung die Festigkeit der Verbindung zwischen Spannteil 4 und Buchse 14 noch dadurch erhöht, daß beide Teile über ein Gewinde 23 miteinander verschraubt sind. Durch die Spannwirkung der dünneren Außenwand 9b wird das übliche Gewindespiel beseitigt und ein zusätzlicher Sicherungseffekt erzielt. Der mittlere Abschnitt kann auch radial verlaufen.

Statt des Faswerkzeuges 14 können auch andere Zusatzbauteile für bestimmte geeignete Zwecke, beispielsweise zur gleichzeitigen Durchführung von zusätzlichen Bearbeitungsvorgängen, zu Meßzwecken, zur Zuleitung von Kühlmedien in den Arbeitsbereich des Hauptwerkzeuges oder dergleichen eingesetzt werden. Ferner können die Innenwand und die Außenwand der Ringkammer gleiche Wandstärken haben und die Innenwand kann auch durchgehend dicker als die Außenwand sein, so daß sie sich zusammen mit ihrer inneren Spannfläche geringer als die Außenwand dehnt. Es wurde festgestellt, daß zum Spannen ausreichende Dehnungen der jeweils dickeren Wand auch bei Wandstärkenverhältnissen über 1 zu 10 erzielt werden können. Ferner kann sich die Wandstärke einer oder beider Wände in Längsrichtung allmählich oder stufenweise ändern, so daß Ringzonen von unterschiedlicher Dehnspannung entstehen.

## Patentansprüche

1. Dehnspannfutter zum gleichzeitigen Einspannen eines Werkzeugschaftes (6) und eines hohlen Werkzeugteils (14), insbesondere einer Fasbuchse, bei dem
- ein in die Arbeitsspindel einer Werkzeugmaschine einspannbarer massiver Futterkörper (1) in seinem Spannteil (4) eine zentrale Aufnahmebohrung (5) zur Aufnahme des einzuspannenden Werkzeugschafts (6) sowie eine äußere Spannfläche (13) zur Halterung des hohlen Werkzeugteils (14) aufweist
- im Inneren des Spannteils (4) des Futterkörpers (1) eine koaxial zur Aufnahmebohrung (5) und zur äußeren Spannfläche (13) angeordnete langgestreckte Ringkammer (7) ausgebildet ist, und
- eine Einrichtung zum Erzeugen eines hydraulischen Innendrucks vorgesehen ist,
- wobei durch hydraulischen Innendruck in der Ringkammer (7) ihre beiden Umfangswände nach radial innen zum Spannen des Werkzeugschaftes (6) und nach radial außen zum Spannen des hohlen Werkzeugteils (14) elastisch verformbar sind.

2. Dehnspannfutter nach Anspruch 1, dadurch gekennzeichnet, daß das hohle Werkzeugteil (14) auf dem Futterkörper (1) gegen Verdrehung gesichert festgelegt ist.

3. Dehnspannfutter nach Anspruch 2, dadurch gekennzeichnet, daß zur Drehsicherung an dem hohlen Werkzeugteil (14) mindestens eine axial vorstehende Lasche (17) vorgesehen ist, die in mindestens eine Ausnehmung (18) im Futterkörper (1) mit vorgegebenem Längsspiel eingreift.

4. Dehnspannfutter nach einem der Ansprüche 1 bis 3, dadurch gekennzeichnet, daß das hohle Werkzeugteil eine Fasbuchse (14) ist, in deren vorderem konisch verjüngtem Endteil mindestens ein Fasmesser (15) befestigt ist.

5. Dehnspannfutter nach einem der Ansprüche 1 bis 4, dadurch gekennzeichnet, daß die Axialposition des hohlen Werkzeugteils (14) auf dem Spannteil (4) des Futterkörpers (1) einstellbar ist.

6. Dehnspannfutter nach Anspruch 5, dadurch gekennzeichnet, daß zur Einstellung der Axialposition des hohlen Werkzeugteils (14) Abstandshülsen (16) vorgesehen sind.

7. Dehnspannfutter nach einem der Ansprüche 1 bis 6, dadurch gekennzeichnet, daß die Dicke der Außenwand (9) kleiner, gleich oder größer als die Dicke der Innenwand (8) ist.

8. Dehnspannfutter nach einem der Ansprüche 1 bis 7, dadurch gekennzeichnet, daß die Außenwand (19) längsgerichtete und über den Umfang verteilte Bereiche (20) von verringerter Wandstärke in wechselnder Folge mit dickeren Wandbereichen (22) aufweist.

9. Dehnspannfutter nach einem der Ansprüche 1 bis 8, dadurch gekennzeichnet, daß sich die Dicken der Außenwand (9a, 9b) und der Innenwand (8a, 8b) über die Länge der Ringkammer (7a, 7b) ändern.

10. Dehnspannfutter nach Anspruch 4, dadurch gekennzeichnet, daß die auf dem Spannteil (4) plazierte Buchse (14) im Spannbereich mit dem Spannteil (4) verschraubt ist.

11. Dehnspannfutter nach einem der Ansprüche 1 bis 9, dadurch gekennzeichnet, daß die Einrichtung zum Erzeugen eines hydraulischen Druckes in der Ringkammer ein von Hand betätigtes Stellglied (12) aufweist, das in einer Querbohrung im breiteren Mittelteil (3) des Futterkörpers (1) manuell verstellbar angeordnet ist und dessen Kolbenteil bei seiner Verstellung einen hydraulischen Druck in einer Zylinderkammer (11) erzeugt, der über einen Kanal (10) in die Ringkammer (7) übertragen wird.

12. Dehnspannfutter nach einem der Ansprüche 1 bis 9, dadurch gekennzeichnet, daß die Einrichtung zum Erzeugen des hydraulischen Druckes in der Ringkammer (7) eine äußere, insbesondere maschineneigene Druckwelle enthält, die über Kanäle im Futterkörper mit der Ringkammer (7) verbunden ist.

## Claims

1. An expanding chuck for simultaneously clamping a tool shank (6) and a hollow tool part (14), particularly a chamfering bush, wherein
- a solid chuck body (1) adapted to be clamped in the work spindle of a machine tool has in its clamping part (4) a central receiving bore (5) to receive the tool shank (6) for clamping and an outer clamping surface (13) for holding the hollow tool part (14)
- an elongate annular chamber (7) disposed coaxially to the receiving bore (5) and to the outer clamping surface (13) is formed in the interior of the clamping part (4) of the chuck body (1), and
- a device is provided for generating a hydraulic internal pressure,
- wherein by means of hydraulic internal pressure in the annular chamber (7) its two peripheral walls are elastically deformable radially inwards for clamping the tool shank (6) and radially outwards for clamping the hollow tool part (14).

2. An expanding chuck according to claim 1,
characterised in that the hollow tool part (14) is fixed on the chuck body (1) so as to be secured against rotation.

3. An expanding chuck according to claim 2,
characterised in that at least one axially projecting lug (17) is provided on the hollow tool part (14) and engages with predetermined longitudinal clearance in at least one recess (18) in the chuck body (1) for anti-rotation purposes.

4. An expanding chuck according to any one of claims 1 to 3, characterised in that the hollow tool part is a chamfering bush (14) in the front conically tapering end part of which there is fixed at least one chamfering cutter (15).

5. An expanding chuck according to any one of claims 1 to 4, characterised in that the axial position of the hollow tool part (14) on the clamping part (4) of the chuck body (1) is adjustable.

6. An expanding chuck according to claim 5,
characterised in that spacer sleeves (16) are provided for adjustment of the axial position of the hollow tool part (14).

7. An expanding chuck according to any one of claims 1 to 6, characterised in that the thickness of the outer wall (9) is less than, equal to or larger than the thickness of the inner wall (8).

8. An expanding chuck according to any one of claims 1 to 7, characterised in that the outer wall (19) has longitudinally directed peripherally distributed zones (20) of reduced wall-thickness in alternating sequence with thicker wall zones (22).

9. An expanding chuck according to any one of claims 1 to 8, characterised in that the thicknesses of the outer wall (9a, 9b) and of the inner wall (8a, 8b) vary over the length of the annular chamber (7a, 7b).

10. An expanding chuck according claim 4,
characterised in that the bush (14) placed on the clamping part (4) is screwed to the clamping part (4) in the clamping zone.

11. An expanding chuck according to any one of claims 1 to 9, characterised in that the device for generating a hydraulic pressure in the annular chamber comprises a manually actuated actuator (12) disposed to be manually adjustable in a transverse bore in the wider middle part (3) of the chuck body (1), the piston part of the actuator during its movement generating a hydraulic pressure in a cylinder chamber (11), said pressure being transmitted to the annular chamber (7) via a duct (10) .

12. An expanding chuck according to any one of claims 1 to 9, characterised in that the means for generating the hydraulic pressure in the annular chamber (7) comprises an external pressure wave, particularly specific to the machine, which communicates with the annular chamber (7) via ducts in the chuck body.

## Revendications

1. Mandrin de serrage expansible destiné à serrer simultanément le fût (6) d'un outil et une partie creuse (14) de l'outil, en particulier une douille de chanfreinage, dans lequel :
- un corps de mandrin massif (1) susceptible d'être serré dans la broche de travail d'une machine-outil comporte dans sa partie de serrage (4) un perçage de réception central (5) pour la réception du fût (6) de l'outil à serrer, ainsi qu'une surface de serrage extérieure (13) pour le maintien de la partie creuse (14) de l'outil,
- à l'intérieur de la partie de serrage (4) du corps de mandrin (1) est réalisée une chambre annulaire (7) allongée, agencée coaxialement par rapport au perçage de réception (5) et à la surface de serrage extérieure (13), et
- il est prévu des moyens pour produire une pression intérieure hydraulique,
- de sorte que sous une pression intérieure hydraulique dans la chambre annulaire (7) ses deux parois périphériques sont susceptibles de se déformer élastiquement radialement vers l'intérieur afin de serrer le fût (6) de l'outil, et radialement vers l'extérieur afin de serrer la partie creuse (14) de l'outil.

2. Mandrin de serrage expansible selon la revendication 1, caractérisé en ce que la partie d'outil creuse (14) est fixée sur le corps de mandrin (1) de façon bloquée à l'encontre d'une rotation.

3. Mandrin de serrage expansible selon la revendication 2, caractérisé en ce que pour le blocage à l'encontre de la rotation il est prévu sur la partie d'outil creuse (14) au moins une patte (17) en dépassement axial, laquelle s'engage avec un jeu longitudinal prédéterminé dans au moins un évidement (18) dans le corps de mandrin (1).

4. Mandrin de serrage expansible selon l'une des revendications 1 à 3, caractérisé en ce que la partie d'outil creuse est une douille de chanfreinage (14), et en ce qu'au moins un couteau de chanfreinage (15) est fixé dans la partie terminale antérieure de ladite douille, en rétrécissement conique.

5. Mandrin de serrage expansible selon l'une des revendications 1 à 4, caractérisé en ce que la position axiale de la partie d'outil creuse (14) sur la partie de serrage (4) du corps de mandrin (1) est réglable.

6. Mandrin de serrage expansible selon la revendication 5, caractérisé en ce que pour le réglage de la position axiale de la partie d'outil creuse (14) sont prévues des douilles d'écartement (16).

7. Mandrin de serrage expansible selon l'une des revendications 1 à 6, caractérisé en ce que l'épaisseur de la paroi extérieure (9) est inférieure, égale ou supérieure à l'épaisseur de la paroi intérieure (8).

8. Mandrin de serrage expansible selon l'une des revendications 1 à 7, caractérisé en ce que la paroi extérieure (19) comprend des zones orientées longitudinalement (20) et réparties sur la périphérie avec une épaisseur de paroi réduite, en succession alternée avec des zones de paroi plus épaisses (22).

9. Mandrin de serrage expansible selon l'une des revendications 1 à 8, caractérisé en ce que les épaisseurs de la paroi extérieure (9a, 9b) et de la paroi intérieure (8a, 8b) varient sur la longueur de la chambre annulaire (7a, 7b).

10. Mandrin de serrage expansible selon la revendication 4, caractérisé en ce que la douille (14) placée sur la partie de serrage (4) est vissée sur la partie de serrage (4) dans la plage de serrage.

11. Mandrin de serrage expansible selon l'une des revendications 1 à 9, caractérisé en ce que les moyens pour produire une pression hydraulique dans la chambre annulaire comprennent un organe de positionnement (12) actionné à la main, agencé avec faculté de déplacement manuel dans un perçage transversal dans la partie médiane (3) large du corps de mandrin (1), et dont la partie formant piston produit lors de son déplacement une pression hydraulique dans une chambre cylindrique (11), ladite pression étant transmise jusque dans la chambre annulaire (7) via un canal (10).

12. Mandrin de serrage expansible selon l'une des revendications 1 à 9, caractérisé en ce que les moyens pour produire la pression hydraulique dans la chambre annulaire (7) comprennent un arbre de compression extérieur, en particulier un arbre propre à la machine, relié à la chambre annulaire (7) via des canaux dans le corps de mandrin.
